# EUROPEAN PATENT SPECIFICATION

(11) **EP 1 457 300 B1**
(45) Date of publication and mention of the grant of the patent: **12.12.2007**
(21) Application number: 03005700.4
(22) Date of filing: 13.03.2003
(51) Int. Cl.: B29C 45/00, B29C 45/26, B29L 23/00

(54) **Method and apparatus for the discontinuous production of pipe fittings having low warpage**
Verfahren und Vorrichtung zur diskontinuierlichen Herstellung von Rohrverbindungen mit geringem Verzug
Procédé et dispositif de production discontinue des raccords de tuyau avec faible gauchissement

(43) Date of publication of application: 15.09.2004
(73) Proprietor: Borealis Technology Oy, 06201 Porvoo (FI)
(72) Inventor: McGoldrick, James, 4614 Marchtrenk (AT); Brandstetter, Ing.Franz, 4211 Alberndorf (AT); Sageder, Ing.Anton, 4030 Linz (AT)
(74) Representative: Grünecker, Kinkeldey, Stockmair & Schwanhäusser Anwaltssozietät

(56) References cited:
- EP-A- 0 654 338
- DE-A- 1 504 485
- US-A- 5 013 513
- US-B1- 6 503 430
- PATENT ABSTRACTS OF JAPAN vol. 010, no. 295 (M-523), 7 October 1986 (1986-10-07) -& JP 61 110522 A (OLYMPUS OPTICAL CO LTD), 28 May 1986 (1986-05-28)
- PATENT ABSTRACTS OF JAPAN vol. 015, no. 389 (M-1164), 2 October 1991 (1991-10-02) -& JP 03 159713 A (OLYMPUS OPTICAL CO LTD), 9 July 1991 (1991-07-09)

## Description

The invention relates to a method and apparatus for the discontinuous production of pipe fittings by injection moulding of thermoplastic polymers.

### Background

Pipe fittings made of plastics are presently produced using discontinuous injection moulding methods. The disadvantages of these methods are their insufficient shape- (ovality of openings) and dimensional control, and the time consuming and work-intensive finishing of the fittings, that is, in the removal of complicated gating systems from the fitting after the injection-moulding process and the re-processing of the removed gating systems. In order to be able to fulfil the requirements of national and international standards, pipe fittings often must be made from materials having high molecular weights. Such materials however, also exhibit anisotropic shrinkage behaviour, e.g. polyolefins, such as polypropylene or polyethylene. This further complicates the production of fittings which must fulfil the dimensional requirements which are defined in the relevant standards.

Currently, there are the following three main production methods
a) Direct injection from the sprue side on to the fitting periphery with one or more points of injection using hot runner nozzles (or indirectly with cold cone).

This type of fitting requires little or no finishing work (optionally removal of the cold cone) but they exhibit a strong tendency to warp. Ovality of the fitting and other dimensional problems can be the consequence of such a production method. Dimensional tolerances and out-of-roundness requirements are not achieved. The usage of such fittings leads to problems in installing the fittings in a pipeline using commonly used jointing methods such as welding, gluing, screwing, or insertion, and would thus lead to high reject rates.
b) Indirect injection using a cold channel manifold with one or more points of injection along the parting plane of the mould. The points of injection can be designed as channels or tunnels. This variant has lower mould costs, however, there is no further improvement regarding the problems described under point a).
c) Indirect injection via a cold channel manifold (often as a cascade) and peripheral film gating on the cross-sectional area of the opening of the fitting. This technique results in low-warpage fittings, however with high work costs due to the fact that the gating system has to be cut off from the fitting and because the gating material has to be reworked and recycled.

JP 09-216256 discloses an apparatus for injection moulding of cylindrical, conductive rubber parts. In order to keep the liquid rubber sufficiently fluid, a part of the gating system is kept at a temperature of 70 - 100 °C, while the mould itself is heated to 150 - 170 °C, to promote crosslinking of the rubber. Rubber is not a thermoplastic material. A further part of the gating system is not heated at all. Such an apparatus cannot give any indication as to a process and apparatus for injection moulding of pipe fittings having low warpage from thermoplastic polymer.

JP 61-110522 discloses a process for injection moulding of mounting rings for lenses of optical instruments. A number of injection points is provided on each of the front sides of the ring and the injection points from each front side are shifted relative to each other in a circumferential direction. This is intended to provide the ring with increased resistance to a mechanical load in radial direction.

US 5,013,513 discloses a process and apparatus for injection moulding of voluminous and thin-walled container and uses a hot runner system. With such voluminous bodies the so-called core shift is a known problem. In order to solve or alleviate this problem the US 5,013,513 provides for an exactly balanced positioning of the injection positions both in the periphery of the container bottom and in the container bottom itself. The proposed mould of the US 5,013,513 also has degassing vents to allow air to escape from the mould in a controlled manner.

US 6,503,430 discloses a cold runner injection molding system for molding a hollow plastic article. The runner system consists of a core runner cavity within the hollow mold core and a runner cavity in the mold block, the former brought into injection position simultaneously with the insertion of the core into the mold. The cold runner system allows to remove solidified material from the core by pulling it out. The molding system has a particular applicability to the production of molded plastic parts formed in a sequence of stages utilizing plastics having at least one different characteristic at each stage.

It is the object of the invention to provide a method and apparatus for the discontinuous production of pipe fittings by injection moulding of thermoplastic polymers. The method and apparatus according to the invention shall allow the production of pipe fittings with low warpage when processing a material exhibiting anisotropic shrinkage behaviour and no or only minimal finishing costs due to e.g. reworking and recycling of cut off gating systems.

The above object is accomplished by a method according to claim 1.

The reason for the warpage of fittings lies in the fact that high molecular weight polymers exhibit anisotropic shrinkage during their cooling process. The difference between the shrinkage in the longitudinal and transverse directions to the material flow may amount up to 3 % or more. During the injection of the polymer material, starting at the point of injection, an orientation of the molecules of the polymer takes place. These orientations are frozen during the cooling process and, due to the direction-dependant shrinkage properties of the material the fitting warps, one effect of which is out-of-roundness of the openings.

It was found that the positioning of the injection gates is a critical factor in the avoidance/reduction of warpage. By positioning the injection gates at the circumference of the frontal cross section of the pipe fitting the molecules of the polymer material are oriented in a main direction. Therefore, the anisotropic shrinkage does not have any noteworthy influence on the dimensional accuracy of the openings of the pipe fitting. Roundness-related tolerances of the fittings can easily be met.

It is further important that the number of injection gates is at least three. Out-of-roundness is even less with a higher number of injection gates.

While the problems associated with anisotropic shrinkage are generally referred to as "out-of-roundness" herein, it is to be understood, that the method and apparatus of the invention are equally applicable to almost any kind of geometric shape of the cross section of the fitting, including but not limited to round, square, oval, hexagonal, octagonal and asymmetric shapes. Out-of-roundness therefore means any unacceptable deviation from the intended shape.

The molten polymer is transported from a source of molten polymer, e.g. an extruder, through a hot runner system into the mould cavity. The mould cavity was previously formed by inserting a core into a mould, and which usually consists of two halves which are closed prior to or simultaneously with the insertion of the core.

The hot runner system comprises a hot runner manifold and a number of hot runner nozzles, each nozzle being one of the injection gates.

By using this hot runner system instead of cold distributors it is possible to avoid the cutting process which is presently in common use by manufacturers of pipe fittings, because with hot runner nozzles there are no remainders left from the gating system on the fitting. As an additional effect, the reworking, recycling, and reprocessing of the waste material is avoided.

Preferably, the direction of injection is chosen to be parallel to a main axis of the fitting.

It is important for the method according to the invention, that the hot runner system is free from interruptions, i.e. the molten polymer is kept above melt temperature along the entire way from the polymer source to the mould cavity. Otherwise it would not be possible to achieve the intended waste free injection moulding.

The polymers for which the method according to the invention is used, are mainly polymers with anisotropic shrinkage behaviour. Examples of such polymers are polyolefinic materials, especially homo- and copolymers of propylene, ethylene and butylene; as well as any blends thereof including all masterbatch blends.

According to the invention, the molten polymer is transported through a two-part hot runner system, the first part being comprised of a stationary hot runner and the second part comprising the hot runner manifold, which second part is brought into injection position essentially simultaneously with insertion of the core into the mould.

It is especially preferable that the second part of the two-part hot runner system comprises both the hot runner manifold and the injection gates.

For pipe fittings, it is preferable that the core is comprised of at least two parts, which - in the case of exactly two core parts - are inserted into the mould from opposing directions. The above mentioned second part of the hot runner system is contained within one of the core parts.

Pipe fittings often have branches, branching off from a main axis of the fitting at an angle of up to 90°.

For the production of such fittings it is preferred that the core is comprised of three or more parts, where two parts are inserted into the mould from opposing directions and the remaining core parts are inserted into the mould at an angle to the first core parts, thereby forming a mould cavity for a pipe fitting with one or more branches.

The method of the invention includes pipe fittings which may be linear, bent or branched. Branched pipe fittings produced according to the invention, may have one or multiple branches, each branch having an angle to a main axis of the fitting of up to 90° and including Y-shaped fittings.

In a further aspect, the invention relates to an apparatus for the discontinuous production of pipe fittings by injection moulding of thermoplastic polymers according to claim 5. Such an apparatus is comprised of a mould, a core and a mould cavity between the mould and the core, a source of molten polymer and a hot runner system for transporting molten polymer from the source of molten polymer into the mould cavity.

The object of the invention is achieved by a hot runner system which contains a hot runner manifold for distributing molten polymer and a number of injection gates, molten polymer being conveyable from the hot runner manifold to the injection gates,
- the number of injection gates being at least three,
- the injection gates being distributed across the circumference of a frontal cross section of the mould cavity,
- each injection gate comprising a hot runner nozzle and
- the hot runner system is a two-part hot runner system, where the first part is a stationary hot runner and where the second part which comprises the hot runner manifold is movable together with the core.

It is still more preferable, that the second part of the two-part hot runner system comprises both the hot runner manifold and the injection gates.

One important feature of the apparatus according to the invention is the possibility to inject molten polymer from the frontal cross section of the mould cavity. Preferably, the hot runner nozzles are oriented in such a way, that the flow of molten polymer through each nozzle is oriented parallel to a main axis of the fitting in this area, said main axis being a straight line which is perpendicular to the frontal cross section of the mould cavity.

A further important feature of the apparatus according to the invention is the hot runner system, which extends continuously from the source of molten polymer, e.g. an extruder, to the mould cavity.

A still further important feature of an embodiment of the apparatus according to the invention is the two-part hot runner system, the first part being stationary, the second part being movable with the core, preferably being contained within the core.

Generally, what is referred to herein as "core" or "core part" encompasses both the actual core or core part, as well as the respective core puller. Core part and core puller are connected to each other. Hence, the core puller is included into what is referred to herein as core.

According to a further embodiment, the apparatus comprises a core which is comprised of at least two parts, which are insertable into the mould from opposing directions, where the second part of the hot runner system is contained within one of the core parts.

For the production of branched fittings the core is comprised of three or more parts, where two parts can be inserted into the mould from opposing directions and the remaining core parts can be inserted into the mould at an angle to the first core parts, thereby forming a mould cavity for a pipe fitting with one or more branches.

Method and apparatus of the invention are further illustrated by the enclosed drawing.

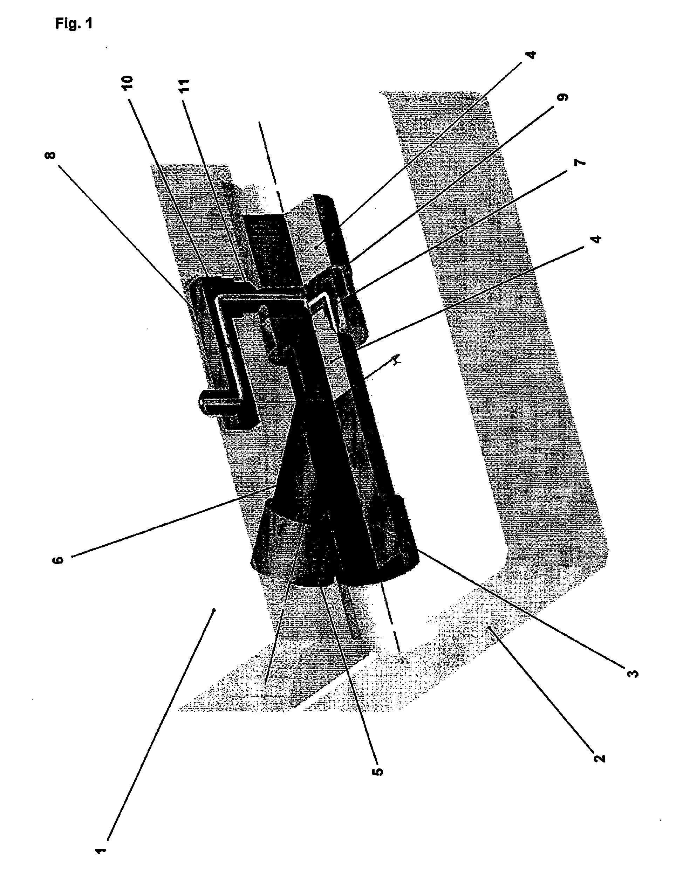

Fig. 1 schematically shows a sectional cut of an apparatus according to the invention.

Fig. 1 shows a mould **1,2,** consisting of two mould halves, i.e. a stationary cavity plate **1** and a movable cavity plate **2**. In Fig. 1 the mould is in a closed position and a number of core parts **3,4,5** is inserted into the mould. The mould is shaped in such a way, that - together with the core parts - a mould cavity **6** is established between the mould **1,2** and the core **3,4,5**. The mould cavity **6** has the shape of a branched pipe fitting **12** with one branch (corresponding to core part **5**) being at an angle of about 45° to the other two core parts **3,4**.

Injection onto the pipe fitting **12** is accomplished from the front side using hot runner nozzles **7** which are included within the core puller **4**. In order to achieve a significantly improved warpage behavior, the number of nozzles is at least three. It is possible to use a variety of different hot runner nozzles, e.g. torpedo nozzles, open nozzles, needle shut-off nozzles, etc.

This kind of direct injection allows a waste free production of moulded parts. It is preferred to use hot runner needle shut-off nozzles. These nozzles are characterised by leaving only smooth gate marks on the surface of the moulded part. Further, an exact control of process parameters, especially during the holding pressure phase is possible.

The fitting or the hot runner nozzles **7**, respectively, are supplied with molten polymer **8** through a hot runner manifold **9**. The hot runner manifold **9** and the hot runner nozzles **7** are situated within the core puller **4**. In case the nozzles **7** are needle shut-off nozzles the necessary actuators are also situated within the core puller **4**. Needle shut-off nozzles also allow independent operation of each nozzle, which is necessary for certain geometric mould shapes.

The hot runner manifold **9** is supplied with molten polymer **8** through a hot runner **10**, which is built into the stationary mould plate **1**. When the mould is opened, the hot runner system is interrupted between the hot runner manifold **9** and the stationary hot runner **10**. The stationary hot runner **10** is then closed by means of a valve gate nozzle **11**. While the hot runner system is interrupted between the hot runner manifold **9** and the stationary hot runner **10** hot runner manifold may also be closed, e.g. by means of a non-return valve.

## Claims

1. Method for the discontinuous production of pipe fittings (12) by injection moulding of thermoplastic polymers (8), by inserting a core (3,4,5) into a mould (1,2), thereby forming a mould cavity (6) between them, and transporting molten polymer (8) from a source of molten polymer through a hot runner system (10,11,9,7) into the mould cavity (6), **characterized in that**
- the molten polymer is transported through a two-part hot runner system (10,11,9,7), the first part being comprised of a stationary hot runner (10,11) and the second part (9,7) comprising the hot runner manifold (9), which second part (9,7) is brought into injection position simultaneously with insertion of the core (4) into the mould,
- the transportation of molten polymer further comprises distributing the molten polymer in a hot runner manifold (9) and transporting the molten polymer (8) to a number of injection gates (7),
- the number of injection gates (7) is at least three,
- the injection gates (7) are distributed across the circumference of the frontal cross section of the pipe fitting (12) and each injection gate (7) comprises a hot runner nozzle, and
- the mould cavity (6) is filled through the at least three injection gates (7).

2. Method according to claim 1, **characterised in that** the second part (9,7) of the two-part hot runner system (10,11,9,7) comprises both the hot runner manifold (9) and the injection gates (7).

3. Method according to any one of claims 1 or 2, **characterised in that** the core (3,4,5) is comprised of at least two parts (3,4) which are inserted into the mould (1,2) from opposing directions, where the second part (7,9) of the hot runner system (10,11,9,7) is contained within one of the core parts (4).

4. Method according to any one of claims 1 to 3, **characterised in that** the core (3,4,5) is comprised of three or more parts, where two parts (3,4) are inserted into the mould (1,2) from opposing directions and the remaining core parts (5) are inserted into the mould (1,2) at an angle to the first core parts (3,4), thereby forming a mould cavity (6) for a pipe fitting (12) with one or more branches.

5. Apparatus for the discontinuous production of pipe fittings (12) by injection moulding of thermoplastic polymers (8) which is comprised of a mould (1,2), a core (3,4,5) and a mould cavity (6) between them, a source of molten polymer and a hot runner system (10,11,9,7) for transporting molten polymer (8) from the source of molten polymer into the mould cavity (6), **characterised in that**
- the hot runner system (10,11,9,7) is a two-part hot runner system, where the first part is a stationary hot runner (10,11) and where the second part (9,7) which comprises the hot runner manifold (9) is movable together with the core (4), and
- the hot runner system (10,11,9,7) contains a hot runner manifold (9) for distributing molten polymer (8) and a number of injection gates (7), molten polymer being conveyable from the hot runner manifold (9) to the injection gates (7),
- the number of injection gates (7) being at least three,
- the injection gates (7) being distributed across the circumference of a frontal cross section of the mould cavity (6) and
- each injection gate (7) comprising a hot runner nozzle.

6. Apparatus according to claim 5, **characterised in that** the second part (9,7) of the two-part hot runner system (10,11,9,7) comprises both the hot runner manifold (9) and the injection gates (7).

7. Apparatus according to any one of claims 5 or 6, **characterised in that** the core (3,4,5) is comprised of at least two parts (3,4), which is insertable into the mould (1,2) from opposing directions, where the second part (7,9) of the hot runner system (10,11,9,7) is contained within one of the core parts (4).

8. Apparatus according to any one of claims 5 to 7, **characterised in that** the core (3,4,5) is comprised of three or more parts, where two parts (3,4) is insertable into the mould (1,2) from opposing directions and the remaining core parts (5) is insertable into the mould (1,2) at an angle to the first core parts (3,4), thereby forming a mould cavity (6) for a pipe fitting with one or more branches.

## Patentansprüche

1. Verfahren zum diskontinuierlichen Herstellen von Rohrarmaturen (12) durch Spritzgießen thermoplastischer Polymere (1), indem ein Kern (3,4,5) in eine Form (1,2) eingeführt wird und so ein Formhohlraum (6) zwischen ihnen ausgebildet wird, und geschmolzenes Polymer (8) von einer Quelle von geschmolzenem Polymer durch ein Heißkanalsystem (10,11,9,7) in den Formhohlraum (6) transportiert wird,
**dadurch gekennzeichnet, dass**
das geschmolzene Polymer durch ein zweiteiliges Heißkanalsystem (10,11,9,7) transportiert wird, wobei der erste Teil aus einem stationären Heißkanal (10,11) besteht, der zweite Teil (9,7) den Heißkanal-Verteiler (9) umfasst und der zweite Teil (9,7) gleichzeitig zum Einführen des Kerns (4) in die Form in Einspritzposition gebracht wird,
der Transport von geschmolzenem Polymer des Weiteren Verteilen des geschmolzenen Polymers in einem Heißkanal-Verteiler (9) und Transportieren des geschmolzenen Polymers (8) zu einer Anzahl von Einspritz-Anschnitten (7) umfasst,
die Anzahl von Einspritz-Anschnitten (7) wenigstens drei beträgt,
die Einspritz-Anschnitte (7) über den Umfang des vorderen Querschnitts der Rohrarmatur (12) verteilt sind und jeder Einspritz-Anschnitt (7) eine Heißkanal-Düse umfasst, und
der Formhohlraum (6) über die wenigstens drei Einspritz-Anschnitte (7) gefüllt wird.

2. Verfahren nach Anspruch 1, **dadurch gekennzeichnet, dass** der zweite Teil (9,7) des zweiteiligen Heißkanalsystems (10,11,9,7) sowohl den Heißkanal-Verteiler (9) als auch die Einspritz-Anschnitte (7) umfasst.

3. Verfahren nach einem der Ansprüche 1 oder 2, **dadurch gekennzeichnet, dass** der Kern (3,4,5) aus wenigstens zwei Teilen (3,4,) besteht, die aus einander entgegengesetzten Richtungen in die Form (1) eingeführt werden, wobei der zweite Teil (7,9) des Heißkanalsystems (10,11,9,7) in einem der Kernteile (4) enthalten ist.

4. Verfahren nach einem der Ansprüche 1 bis 3, **dadurch gekennzeichnet, dass** der Kern (3,4,5) aus drei oder mehr Teilen besteht, wobei zwei Teile (3,4) aus einander entgegengesetzten Richtungen in die Form (1,2) eingeführt werden und die verbleibenden Kernteile (5) in einem Winkel zu den ersten Kernteilen (3,4,5) in die Form (1,2) eingeführt werden, um so einen Formhohlraum (6) für eine Rohrarmatur (12) mit einer oder mehreren Verzweigungen auszubilden.

5. Vorrichtung zum diskontinuierlichen Herstellen von Rohrarmaturen (12) durch Spritzgießen thermoplastischer Polymere (8), die aus einer Form (1,2), einem Kern (3,4,5) und einem Formhohlraum (6) zwischen ihnen, einer Quelle von geschmolzenem Polymer und einem Heißkanalsystem (10,11,9,7) zum Transportieren von geschmolzenem Polymer (8) von der Quelle von geschmolzenem Polymer in den Formhohlraum (6) besteht, **dadurch gekennzeichnet, dass**
das Heißkanalsystem (10,11,9,7) ein zweiteiliges Heißkanalsystem ist, wobei der erste Teil ein stationärer Heißkanal (10,11) ist und der zweite Teil (9,7), der den Heißkanal-Verteiler (9) umfasst, zusammen mit dem Kern (4) bewegt werden kann, und
das Heißkanalsystem (10,11,9,7) einen Heißkanal-Verteiler (9) zum Verteilen von geschmolzenem Polymer (8) und eine Anzahl von Einspritz-Anschnitten (7) enthält und geschmolzenes Polymer von dem Heißkanal-Verteiler (9) zu dem Einspritz-Anschnitten (7) befördert werden kann,
die Anzahl von Einspritz-Anschnitten (7) wenigstens drei beträgt,
die Einspritz-Anschnitte (7) über dem Umfang eines vorderen Querschnitts des Formhohlraums (6) verteilt sind, und
jeder Einspritz-Anschnitt (7) eine Heißkanal-Düse umfasst.

6. Vorrichtung nach Anspruch 5, **dadurch gekennzeichnet, dass** der zweite Teil (9,7) des zweiteiligen Heißkanalsystems (10,11,9,7) sowohl den Heißkanal-Verteiler (9) als auch die Einspritz-Anschnitte (7) umfasst.

7. Vorrichtung nach einem der Ansprüchen 5 oder 6, **dadurch gekennzeichnet, dass** der Kern (3,4,5) aus wenigstens zwei Teilen (3,4) besteht, die aus einander entgegengesetzten Richtungen in die Form (1,2) eingeführt werden können, wobei der zweite Teil (7,9) des Heißkanalsystems (10,11,9,7) in einem der Kernteile (4) enthalten ist.

8. Vorrichtung nach einem der Ansprüche 5 bis 7, **dadurch gekennzeichnet, dass** der Kern (3,4,5) aus drei oder mehr Teilen besteht, wobei zwei Teile (3,4) aus einander entgegengesetzten Richtungen in die Form (1,2) eingeführt werden können und die verbleibenden Kernteile (5) in einem Winkel zu den ersten Kernteilen (3,4) in die Form (1,2) eingeführt werden können, um so einen Formhohlraum (6) für eine Rohrarmatur mit einer oder mehreren Verzweigungen auszubilden.

## Revendications

1. Procédé de production discontinue de raccords de tuyau (12) par moulage par injection de polymères thermoplastiques (8), en insérant un noyau (3, 4, 5) dans un moule (1, 2), formant ainsi une empreinte (6) entre eux, et en transportant le polymère fondu (8) depuis une source de polymère fondu à travers un système à canaux chauffés (10, 11, 9, 7) dans l'empreinte (6), **caractérisé en ce que**
- le polymère fondu est transporté dans un système à canaux chauffés à deux parties (10, 11, 9, 7), la première partie étant constituée d'un canal chauffé fixe (10, 11) et la seconde partie (9, 7) comprenant le distributeur du canal chauffé (9), laquelle seconde partie (9, 7) est mise en position d'injection simultanément à l'insertion du noyau (4) dans le moule,
- le transport du polymère fondu comprend en outre la distribution du polymère fondu dans un distributeur de canal chauffé (9) et le transport du polymère fondu (8) vers plusieurs orifices d'injection (7),
- le nombre d'orifices d'injection (7) est au moins de trois,
- les orifices d'injection (7) sont répartis sur la circonférence de la section transversale frontale du raccord de tuyau (12) et chaque orifice d'injection (7) comprend une buse de canal chauffé, et
- l'empreinte (6) est remplie par au moins les trois orifices d'injection (7).

2. Procédé selon la revendication 1, **caractérisé en ce que** la seconde partie (9, 7) du système à canaux chauffés en deux parties (10, 11, 9, 7) comprend à la fois le distributeur du canal chauffé (9) et les orifices d'injection (7).

3. Procédé selon la revendication 1 ou 2, **caractérisé en ce que** le noyau (3, 4, 5) est constitué d'au moins deux parties (3, 4) qui sont insérées dans le moule (1, 2) depuis des sens opposés, dans lequel la seconde partie (7, 9) du système à canaux chauffés (10, 11, 9, 7) est contenue à l'intérieur de l'une des parties de noyau (4).

4. Procédé selon l'une quelconque des revendications 1 à 3, **caractérisé en ce que** le noyau (3, 4, 5) est constitué de trois parties ou plus, dans lequel deux parties (3, 4) sont insérées dans le moule (1, 2) depuis des sens opposés et les parties de noyau restantes (5) sont insérées dans le moule (1, 2) selon un angle par rapport aux premières parties de noyau (3, 4), formant ainsi une empreinte (6) pour un raccord de tuyau (12) à une ou plusieurs branches.

5. Dispositif de production discontinue de raccords de tuyau (12) par moulage par injection de polymères thermoplastiques (8) qui est constitué d'un moule (1, 2), d'un noyau (3, 4, 5) et d'une empreinte (6) entre eux, d'une source de polymère fondu et d'un système à canaux chauffés (10, 11, 9, 7) destiné à transporter le polymère fondu (8) depuis la source de polymère fondu dans l'empreinte (6), **caractérisé en ce que**
- le système à canaux chauffés (10, 11, 9, 7) est un système à canaux chauffés en deux parties, dans lequel la première partie est un canal chauffé fixe (10, 11) et dans lequel la seconde partie (9, 7) qui comprend le distributeur de canal chauffé (9) est déplaçable avec le noyau (4), et
- le système à canaux chauffés (10, 11, 9, 7) contient un distributeur de canal chauffé (a) destiné à répartir le polymère fondu (8) et plusieurs orifices d'injection (7), le polymère fondu étant transportable depuis le distributeur de canal chauffé (9) vers les orifices d'injection (7),
- le nombre d'orifices d'injection (7) étant au moins de trois,
- les orifices d'injection (7) étant répartis sur la circonférence d'une section transversale frontale de l'empreinte (6), et
- chaque orifice d'injection (7) comprenant une buse de canal chauffé.

6. Dispositif selon la revendication 5, **caractérisé en ce que** la seconde partie (9, 7) du système à canaux chauffés (10, 11, 9, 7) comprend à la fois le distributeur de canal chauffé (9) et les orifices d'injection (7).

7. Dispositif selon l'une quelconque des revendications 5 ou 6, **caractérisé en ce que** le noyau (3, 4, 5) est constitué d'au moins deux parties (3, 4), lesquelles peuvent être insérées dans le moule (1, 2) depuis des sens opposés, dans lequel la seconde partie (7, 9) du système à canaux chauffés (10, 11, 9, 7) est contenue dans l'une des parties du noyau (4).

8. Dispositif selon l'une quelconque des revendications 5 à 7, **caractérisé en ce que** le noyau (3, 4, 5) est constitué de trois parties ou plus, dans lequel deux parties (3, 4) peuvent être insérées dans le moule (1, 2) depuis des sens opposés et les parties de noyau restantes (5) peuvent être insérées dans le moule (1, 2) selon un angle par rapport aux première parties de noyau (3, 4), formant ainsi une empreinte (6) pour un raccord de tuyau à une ou plusieurs branches.
